# EUROPEAN PATENT SPECIFICATION

(11) **EP 2 094 472 B1**
(45) Date of publication and mention of the grant of the patent: **30.09.2015**
(21) Application number: 07855283.3
(22) Date of filing: 20.12.2007
(51) Int. Cl.: B29D 11/00

(54) **HIGH INTENSITY UV MOLD PRETREATMENT**
FORMWERKZEUGFORMBEHANDLUNG DURCH HOCHINTENSIVE UV-STRAHLUNG
PRÉTRAITEMENT DE MOULE PAR UV HAUTE INTENSITÉ

(30) Priority: 21.12.2006 US 871363 P
(43) Date of publication of application: 02.09.2009
(73) Proprietor: Novartis AG, 4056 Basel (CH)
(72) Inventor: AGUADO, Celeste, Atlanta, Georgia 30341 (US); LAUER, David, Bruce, Lawrenceville, Georgia 30043 (US); LEBEL, Lynda, Ann, Lilburn, Georgia 30047 (US); KEYES, Lawrence, David, The Woodlands Texas 77381 (US); MORGAN, Courtney, Flem, Alpharetta, Georgia 30022 (US); ROSENBLUM, Karl, William, Atlanta, Georgia 30338 (US); SLACK, Dale, Edward, Alpharetta, Georgia 30004 (US)
(74) Representative: Bohest AG
(86) International application number: PCT/US2007/088260
(87) International publication number: WO 2008/079916

(56) References cited:
- EP-A- 1 078 732
- US-A1- 2002 145 211
- US-A1- 2003 090 014
- US-A1- 2003 163 196
- US-A1- 2006 036 052

## Description

### FIELD OF THE INVENTION

This invention is related to ophthalmic lenses and the associated processes used to manufacture ophthalmic lenses. In particular, the present invention is related to a process for manufacturing contact lenses using high intensity UV light on lens molds to decouple mold creation from lens manufacture.

### BACKGROUND

Contact lenses are widely used for correcting many different types of vision deficiencies. These include defects such as near-sightedness and far-sightedness (myopia and hypermetropia, respectively), astigmatism, and defects in near range vision usually associated with aging (presbyopia). Each type of defect requires a specific correction and coordinating manufacturing process or processes.

Additionally, some lens-wearers may need more than one correction. For example, a person with presbyopia may also have an astigmatism vision error. Those presbyopes may require ophthalmic lenses capable of correcting both astigmatism and presbyopia. Lenses that incorporate corrections for both types of defects usually combine one or more manufacturing processes or entail a lengthier single process.

Lenses that are designed to correct the above-referenced defects may be created through molding, casting or lathe-cutting. For example, contact lenses that are manufactured in large numbers are typically produced by a mold process. In those processes, the lenses are manufactured between two molds without subsequent machining of the surfaces or edges. Such mold processes are described, for example in U.S. Patent No. 6,113,817, which is expressly incorporated by reference as if fully set forth herein. As such, the geometry of the lens is determined by the geometry of the mold. In a typical molding system, lenses are cycled through a series of stations on a semi-continuous basis. The cyclic portion of lens production generally involves dispensing a liquid crosslinkable and/or polymerizable material into a female mold half, mating a male mold half to the female mold half, irradiating to crosslink and/or polymerize, separating the mold halves and removing the lens, extracting and coating the lens, packaging the lens, inserting new mold halves in the case of disposable molds or cleaning the mold halves in the case reusable molds and returning the mold halves to the dispensing position. The polymerization of the material is determined by the application time, position, and amount of UV light applied.

Polypropylene mold surfaces which have been exposed to an air environment for more than a few minutes prior to dosing with formulation yield contact lenses that exhibit properties consistent with inhibition of polymerization at the lens-mold interface. One consequence of the inhibition of the cure at the surface is a reduction in the ion permeability ("IP") of the final contact lens. IP is a critical property for healthy contact lens wear in the case of silicon hydrogel ("SiHy") materials.

Further, the surface of a SiHy contact lens that must be treated in order to impart the required wettability for biocompatibility is critically sensitive to this inhibition in the case of plasma coating processes. This inhibitory effect on polymerization can be overcome through exposure of the mold to a nitrogen environment for sufficiently long times and/or by dosing the mold with formulation within a sufficiently short period of exposure to air.

EP 1,078,732 A discloses the preamble of claim 1.

### SUMMARY OF THE INVENTION

A process disclosed eliminates the necessity of the nitrogen environment to reduce or remove the inhibitory effects of the mold's exposure to air. This process improvement allows the use of aged molds, which improves lens metrological qualities' consistency (Prescription, diameter, etc.).

The present invention seeks to solve the problems listed herein by decoupling the mold manufacture from lens manufacture, according to the method of claim 1.

More preferably, the exposure time is contemplated to last 0.1 - 3 second(s). More preferably still, the exposure time is contemplated to last 0.1 - 1 second(s). Most preferably, the exposure time is contemplated to last 0.5 -1 second (s).

In an apparatus an aperture may be located above or below a UV lamp in the optical path. In a related embodiment, the apparatus further comprises a parabolic reflector. In a related embodiment a lens mold carrier may move the lens molds above or below the aperture.

An object of the present invention is the reduction of the detrimental effects to molds from exposure to air.

A further object of the present invention is the increase of ion permeability in SiHy contact lenses post-cure.

A further object of the present invention is to eliminate the necessity of the nitrogen environment to reduce or remove the inhibitory effects of the mold's exposure to air.

A further object of the present invention is to allow the use of aged molds, which improves lens metrological qualities' consistency.

These and other aspects of the invention will become apparent from the following description of the preferred embodiments taken in conjunction with the following drawings. As would be obvious to one skilled in the art, many variations and modifications of the invention may be effected without departing from the spirit and scope of the novel concepts of the disclosure.

### BRIEF DESCRIPTION OF THE DRAWINGS

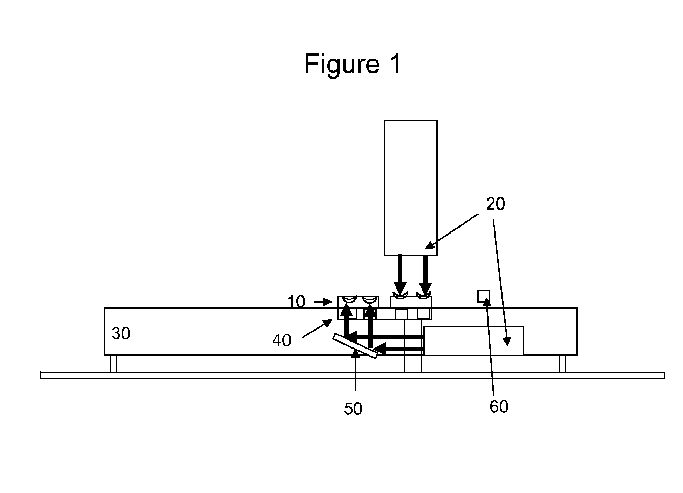

FIG. 1 is a diagram of an apparatus according to the present invention

### DETAILED DESCRIPTION OF THE PREFERRED EMBODIMENTS

Reference now will be made in detail to the embodiments of the invention. It will be apparent to those skilled in the art that various modifications and variations can be made in the present invention without departing from the scope of the invention. For instance, features illustrated or described as part of one embodiment can be used in conjunction with another embodiment to yield a still further embodiment. Thus, it is intended that the present invention cover such modifications and variations as come within the scope of the appended claims and their equivalents. Other objects, features and aspects of the present invention are disclosed in or are obvious from the following detailed description. It is to be understood by one of ordinary skill in the art that the present discussion is a description of exemplary embodiments only, and is not intended as limiting the broader aspects of the present invention.

### DEFINITIONS

Unless defined otherwise, all technical and scientific terms used herein have the same meaning as commonly understood by one of ordinary skill in the art to which this invention belongs. Generally, the nomenclature used herein and the manufacturing procedures are well known and commonly employed in the art. Conventional methods are used for these procedures, such as those provided in the art and various general references. Where a term is provided in the singular, the inventors also contemplate the plural of that term.

An "ophthalmic device," as used herein, refers to a contact lens (hard or soft), a corneal onlay, implantable ophthalmic devices used in, on or about the eye or ocular vicinity.

The term "contact lens" employed herein in a broad sense and is intended to encompass any hard or soft lens used on the eye or ocular vicinity for vision correction, diagnosis, sample collection, drug delivery, wound healing, cosmetic appearance (e.g., eye color modification), or other ophthalmic applications.

A "hydrogel material" refers to a polymeric material which can absorb at least 10 percent by weight of water when it is fully hydrated. Generally, a hydrogel material is obtained by polymerization or copolymerization of at least one hydrophilic monomer in the presence of or in the absence of additional monomers and/or macromers. Exemplary hydrogels include, but are not limited to, poly(vinyl alcohol) (PVA), modified polyvinylalcohol (e.g., as nelfilcon A), poly(hydroxyethyl methacrylate), poly(vinyl pyrrolidone), PVAs with polycarboxylic acids (e.g., carbopol), polyethylene glycol, polyacrylamide, polymethacrylamide, silicone-containing hydrogels, polyurethane, polyurea, and the like. A hydrogel can be prepared according to any methods known to a person skilled in the art.

A "crosslinkable and/or polymerizable material" refers to a material which can be polymerized and/or crosslinked by actinic radiation to obtain crosslinked and/or polymerized material which are biocompatible. Examples of actinic radiation are UV radiation, ionizing radiation (e.g. gamma ray or X-ray irradiation), microwave radiation, (infared radiation - actininic raiation can cause photochemical reactions, if microwave then IR) and the like.

"Polymer" means a material formed by polymerizing one or more monomers.

A "prepolymer" refers to a starting polymer which can be polymerized and/or crosslinked upon actinic radiation to obtain a crosslinked polymer having a molecular weight much higher than the starting polymer.

The term "fluid" as used herein indicates that a material is capable of flowing like a liquid.

"Fluid optical material" as used herein means a polymer, a prepolymer, a corsslinkable and/or polymerizable material, and/or a hydrogel material that is capable of flowing like a liquid.

The present invention is generally related to the manufacture of contact lenses. Specifically, the present invention seeks to provide a more efficient bridge between old manufacture and lens manufacture by reducing the adverse affect of mold exposure to oxygen. In one aspect, the present invention provides a method to produce higher quality lenses by improving ion permeability. Ion permeability is defined in US Patent No. 5,760,100, in particular as described in columns 4, lines 50-67 and column 5, lines 1-2 and is measured by methods as also described in US Patent No. 5, 760, 100. Such methods can be found starting at column 9, line 41 Lenses with appropriate levels of ion permeability are generally characterized as being required for acceptable clinical performance, such as for example on eye movement, which is especially important in the case of silicone hydrogels.

As will be readily appreciated by those of skill in the art, many different types of lenses are possible with the present invention. Contact lenses of the invention can be either hard or soft lenses. A contact lens of the invention can be spherical, a toric, multifocal, toric multifocal contact lens, customized contact lenses, or the like. Contact lenses of the present invention may also correct more than one type of defect, such as, for example, presbyopia and astigmatism.

Soft contact lenses of the invention are preferably made from a fluid optical material, such as a silicon and/or fluorine-containing hydrogel or HEMA with material properties that allow modulation of a refractive index. It will be understood that any fluid optical material that can be processed to a biocompatible optic can be used in the production of a contact lens of the invention. Preferred materials and formulations suitable for this application preferably consist of pure or specifically modified hydrogels, preferably silicon hydrogel containing radiation activated crosslinkable and/or polymerizable functional groups that may be photoinitiated when exposed to a particular wavelength or thermally initiated when heated to a particular temperature.

Ophthalmic lenses may be produced by double-sided molding (DSM) processes. These processes typically involve dispensing a liquid monomer into a female mold half, mating a male mold half to the female, and applying ultraviolet radiation to polymerize the monomers. Such molds may be injection molded or produced in any other feasible way known in the art. The female mold half may have a molding surface that defines the anterior (front) surface of a contact lens. The male mold half may have a molding surface that defines the posterior (back) surface of the lens. The polymerized lens removed from the molds in a DSM process does not usually require surface polishing, but subsequent extraction of unreacted monomer or solvent is commonly required.

An improvement of the DSM process is described in U.S. Patent No. 6,113,817. This improvement may be semi-cyclic and preferably includes the steps of (a) dispensing crosslinkable and/or polymerizable material into a female mold half, (b) mating a male mold half to a female mold half to create a lens cavity; (c) applying radiation to crosslink and/or polymerize the crosslinkable and/or polymerizable material to form a lens; (d) separating the male mold half from the female mold half; (e) washing the mold halves and lens to remove unreacted crosslinkable and/or polymerizable material; (f) ensuring the lens is adjacent a selected mold half (e.g., the female mold half); (g) centering the lens within the selected mold half; (h) grasping the lens (e.g., in a central area) to remove the lens from the mold half; (i) at least partially drying the lens to remove surface water which may impair inspection of the lens; (j) inspecting the lens; (k) depositing an acceptable lens into packaging; (1) cleaning the male and female mold halves; and (m) indexing the male and female mold halves to a position for dispensing crosslinkable and/or polymerizable material. This semi-continuous, partially cyclic molding process reuses or recycles the mold halves used to retain the fluid optical material and give the lens its shape.

The semi-continuous, partially cyclic molding process may be operated with a single mold cycling through the process or a plurality of molds arranged and aligned in a molding carrier in order to improve process efficiency. The molds may include disposable molds, such as polypropylene molds or quartz and brass molds that are reused. The mold halves may be formed from a number of materials, at least one of which transmits the desired radiation for crosslinking and/or polymerization, preferably in the ultraviolet range. Examples of contemplated suitable mold materials include polypropylene, PMMA, polycarbonate, Zenex, Zenor, OPI Resin by Hitachi, TOPAS®, polystyrene, polypropylene and poly(acrylonitriles) such as BAREX. Molds are typically used in the manufacturing process immediately after they are created to achieve optimal performance; however, in some cases immediate use is not possible due to manufacturing constraints. The temperature and conditions of these molds is important as the mold shapes the final lens. Defects in the mold may propogate, causing defects in the lenses.

In some manufacturing techniques, molds may be created off-line by injection molding. Front curve and back curve molds may be produced simulateously or in parallel tracks to produce front curve and back curve molds of essentially the same age. In some embodiments, these molds may be stacked in paired units. In an embodiment in which paired units are utilized, the molds may be used in a last-in, first-out method, which means that the molds may not be used immediately and that some molds may be exposed to ambient air for extended periods of time.

If prior to assembly, the mold halves are exposed to oxygen, the polymerization process may be inhibited to such an extent that the contact lenses will not have the desired physical properties. It is suspected that this is due to the O₂ being adsorbed onto and absorbed into the plastic mold halves, which may adversely affect the polymerization of the lens material. The effect of O₂ on the photopolymerization process is that it strongly inhibits radical-induced polymerization. Polymerization is suppressed until O₂ has been consumed by reaction with radicals until the monomer (or macromer i.e. betacon macromer cross linking could be inhibited) is able to compete successfully with O₂ for initiator radicals.

Exposing mold halves to O₂ before assembly of the mold halves leads to a "closed-open" system during polymerization. When the system is open, O₂ absorbs onto the surface and absorbs into the mold, thus creating an O₂ reservoir. When the mold is assembled (closed), after the induction period when O₂ in the monomer and on and in the mold halves is consumed, polymerization proceeds in the lens bulk. The effect on lens properties is dependent on the amount of O₂ absorbed into the mold prior to assembly.

The effect of O₂ absorbed onto and into the mold on photopolymerization of the reaction mixture is expected to disrupt polymerization at the lens surface, i.e. to cause differential polymerization at the lens surface relative to the lens bulk. This disruption causes more loose polymer ends at the surface due to (premature) termination of polymerization by O₂. These shorter chain polymers at the surface of the lens tend to have lower cross link density, less chain entanglement, and more tackiness than the polymer chains in the bulk of the lens. These factors result in a material property gradient from the lens surface to the lens bulk.

To reduce the deleterious effect of O₂, contact lens manufacture may be carried out in a reduced O₂ environment, and/or the reaction mixture is treated to remove dissolved O₂ prior to polymerization. In manufacturing, this has resulted in the use of techniques such as physical enclosure of the process and use of large quantities of nitrogen to blanket the assembly and pre-assembly areas. This technique includes the plastic mold halves within the blanketed area since the boundary layer of gases on the plastic surfaces will include O₂ if not so protected. Typically, the percent O₂ in the atmosphere surrounding the plastic molds halves is monitored and kept below 0.5 percent, the other 99.5 percent of the atmosphere is the inert gas. For example, see U.S. Pat. No. 5,555,504.

The irradiation step uses a high intensity UV light with an exposure time of 0.1 - 5 second(s). More preferably, the exposure time is contemplated to last 0.1 - 3 second(s). More preferably still, the exposure time is contemplated to last 0.1 - 1 second(s). Most preferably, the exposure time is contemplated to last 0.5 - 1 second (s).

The prior art discloses that the amount of oxygen exposure must be limited or avoided to prevent the deleterious effects that the exposure to oxygen has on the manufacture of contact lenses. Various techniques for reducing the deleterious effects of O₂ on the polymerization of contact lenses are found in the following U.S. patents: 5,362,767 Herbrechtmeier, et al 5,391,589 Kiguchi, et al 5,597,519 Martin, et al 5,656,210 Hill, et al 5,681,510 Valint, Jr., et al. EP 785,854 A discloses a process in which plastic molds are treated prior to dosing with the reactive monomer mix to remove substantially all of the O₂. The removal of the O₂ can be accomplished by contacting the mold pieces with an inert gas or by using a vacuum. Molds that were not treated to remove the O₂ provided contact lenses with high percentages of defects.

The present invention provides a method to counteract the adverse effects of oxygen exposure by decoupling the mold creation process from the polymerization of lenses. This decoupling will allow greater flexibility in when the molds are manufactured and used in relation to the polymerization process. In one embodiment of the present invention this is accomplished by exposing the molds to UV light immediately prior to the polymerization process of the lens.

A possible setup of the system is shown in Fig. 1. The UV lamp 20 is preferably mounted above the molds and may be about five inches from the molds. In an alternative embodiment, the UV illumination may be achieved from underneath the carrier. In this embodiment, a mirror 50 may be placed at a forty-five degree angle beneath carrier 10 to direct light to the mold. An aperture may be located between the molds and lamp 20. Carrier 10 may be seated in a pallet 40 that rides along a conveyor 30.

The lens mold carriers 10 are preferably situated below the UV lamp 20. In one embodiment, an aperture may be used to control exposure. In one setup, the molds may be moved beneath the lamp 20 on a conveyor 30 at a specific speed. The lamp 20 may remain operative continuously or may actuate via sensor.

In an embodiment of the present invention, UV illumination is accomplished by using a high intensity lamp system with a H+ bulb, such as a Fusion Systems Inc. model F300 with a model T300MB irradiator and a H+ UV source or a Fusion Systems Inc. model VPS6 with a model I250 irradiator and a H+ UV source. In a related embodiment, a parabolic reflector configuration may be used. For example, in an embodiment in which a model T300MB irradiator the standard source and reflector geometry approximates an elliptical reflector cross section. An optional configuration is to locate the source closure to the reflector vertex thereby approximating a parabolic reflector cross section improving the UV light's parallel nature.

The UV intensity has approximate values of UVA 400mW/cm², between UVB 375mW/cm² and UVB 400mW/cm², and UVC 75mW/cm². UV sources of particular types emit approximately constant relative amounts of radiation in each UV region. The ratio of peak irradiance of UVA to UVB is approximately 1 for a H+ source. For instance the ratio of peak irradiance of UVC to UVA is typically in the range of 0.16 to 0.22 for a H+ source. Characterization and monitoring of the UV source and optical system requires radiometric measurements. Radiometers appropriate to the high intensities described in this disclosure may include the EIT Inc model UV PowerMAP™ four channel radiometer in the high power configuration or the EIT Inc. model 3DCURE™ radiometer system with the high sampling rate option. UVC doses of 15 to 75 mJ/cm² can be utilized. A preferred range of UVC is aproximatly 30 to 50 mJ/cm² in one embodiment using the VPS6 system. A preferred range of UVC is aproximatly 15 to 30 mJ/cm² in one embodiment using the F300 system. A preferred range of UVC of aproximatly 25 to 75 mJ/cm² in yet another embodiment using the F300 system.

The invention has been described in detail, with particular reference to certain preferred embodiments, in order to enable the reader to practice the invention without undue experimentation. A person having ordinary skill in the art will readily recognize that many of the previous components, compositions, and/or parameters may be varied or modified to a reasonable extent without departing from the scope of the invention. Furthermore, titles, headings, example materials or the like are provided to enhance the reader's comprehension of this document, and should not be read as limiting the scope of the present invention. Accordingly, the invention is defined by the following claims.

## Claims

1. A method for making an ophthalmic lens comprising:
creating a mold;
irradiating said mold with UV light such that irradiating said mold reduces the effects of exposing the mold to oxygen;
after irradiating said mold introducing a fluid optical material into said mold; and
exposing said mold and fluid optical material to an energy source;
wherein said energy source polymerizes said fluid optical material,
and wherein the said irradiating step is being performed for an exposure time of between 0.1 and 5 seconds,
**characterized in, that**
in said irradiating step a light intensity is used of approximately UVA 400 mW/cm², of approximately between UVB 375mW/cm² and UVB 400 mW/cm², and of approximately UVC 75 mW/cm².

2. The method of claim 1, wherein the exposure time is between 0.1 and 3 seconds, more preferably between 0.1 and 1 second, and most preferably between 0.5 and 1 second.

3. The method of claim 1 or claim 2, wherein said irradiation step comprises utilizing a light dose of UVC between 15 and 75 mJ/cm².

4. The method of claim 3, wherein said light dose of UVC is approximately 30 to 50 mJ/cm².

5. The method of claim 3, wherein said light dose of UVC is approximately 15 to 30 mJ/cm².

6. The method of claim 3, wherein said light dose of UVC is approximately 25 to 75 mJ/cm².

7. The method according to any one of the preceding claims, wherein irradiating said mold occurs within 72 hours of said creating said mold.

## Patentansprüche

1. Verfahren zum Herstellen einer ophthalmischen Linse, wobei das Verfahren umfasst:
Erstellen einer Form;
Bestrahlen der Form mit UV-Licht derart, dass das Bestrahlen der Form die Auswirkungen verringert, die eine Sauerstoffexposition der Form hat;
nach dem Bestrahlen der Form, Einführen eines flüssigen optischen Materials in die Form; und
Exponieren der Form und des flüssigen optischen Materials zu einer Energiequelle;
wobei die Energiequelle das flüssige optische Material polymerisiert,
und wobei der Bestrahlungsschritt mit einer Expositionszeit zwischen 0.1 und 5 Sekunden durchgeführt wird,
**dadurch gekennzeichnet, dass**
in dem Bestrahlungsschritt eine Lichtintensität verwendet wird von etwa UVA 400 mW/cm², von etwa zwischen UVB 375 mW/cm² und UVB 400 mW/cm², und von etwa UVC 75 mW/cm².

2. Verfahren nach Anspruch 1, wobei die Belichtungszeit zwischen 0.1 und 3 Sekunden beträgt, mehr bevorzugt zwischen 0.1 und 1 Sekunde und am meisten bevorzugt zwischen 0.5 und 1 Sekunde.

3. Verfahren nach Anspruch 1 oder Anspruch 2, wobei der Bestrahlungsschritt das Verwenden einer Lichtdosis von UVC zwischen 15 und 75 mJ/cm² umfasst.

4. Verfahren nach Anspruch 3, wobei die Lichtdosis von UVC etwa 30 bis 50 mJ/cm² beträgt.

5. Verfahren nach Anspruch 3, wobei die Lichtdosis von UVC etwa 15 bis 30 mJ/cm² beträgt.

6. Verfahren nach Anspruch 3, wobei die Lichtdosis von UVC etwa 25 bis 75 mJ/cm² beträgt.

7. Verfahren nach einem der vorangehenden Ansprüche, wobei das Bestrahlen der Form innerhalb von 72 Stunden nach dem Erstellen der Form erfolgt.

## Revendications

1. Méthode pour fabriquer une lentille ophtalmique comprenant:
créer un moule;
irradier ledit moule avec de la lumière ultraviolette de façon à ce que l'irradiation dudit moule réduise les effets d'exposition du moule à l'oxygène ;
après irradiation dudit moule, introduire un matériau optique fluide dans ledit moule; et
exposer ledit moule et ledit matériau optique fluide à une source d'énergie ;
dans laquelle ladite source d'énergie polymérise ledit matériau optique fluide,
et dans laquelle ladite étape d'irradiation est exécutée pendant un temps d'exposition entre 0.1 et 5 secondes,
**caractérisé en ce que**
dans l'étape d'irradiation une intensité lumineuse d'environ UVA 400 mW/cm², d'environ entre UVB 375mW/cm² et UVB 400mW/cm², et d'environ UVC 75 mW/cm² est utilisée.

2. Méthode selon la revendication 1, dans laquelle le temps d'exposition est entre 0.1 et 3 secondes, plus préférentiellement entre 0.1 et 1 secondes, et le plus préférentiellement entre 0.5 et 1 seconde.

3. Méthode selon la revendication 1 ou 2, dans laquelle ladite étape d'irradiation comprend l'utilisation d'une dose de lumière UVC entre 15 et 75 mJ/cm².

4. Méthode selon la revendication 3, dans laquelle ladite dose de lumière d'UVC est approximativement 30 à 50 mJ/cm².

5. Méthode selon la revendication 3, dans laquelle ladite dose de lumière d'UVC est approximativement 15 à 30 mJ/cm².

6. Méthode selon la revendication 3, dans laquelle ladite dose de lumière d'UVC est approximativement 25 à 75 mJ/cm².

7. Méthode selon une quelconque des revendications précédentes, dans laquelle l'irradiation du moule se passe en dedans de 72 heures de ladite création du moule.
